# FASCICULE DE BREVET EUROPEEN

(11) **EP 1 901 206 B1**
(45) Date de publication et mention de la délivrance du brevet: **11.03.2009**
(21) Numéro de dépôt: 06019276.2
(22) Date de dépôt: 14.09.2006
(51) Int. Cl.: G06K 19/067, G06K 7/08, G06K 7/00

(54) **Dispositif pour l'identification et le comptage d'articles en vrac**
Vorrichtung zur Identifizierung und Zählung von Artikeln
Apparatus for identification and counting of articles

(43) Date de publication de la demande: 19.03.2008
(73) Titulaire: NBG ID, 84953 Cavaillon (FR); Neopost Technologies, 92220 Bagneux (FR)
(72) Inventeur: Fabre, Bruno, 84300 Cavaillon (FR); Venture, Guy, 13560 Senas (FR)
(74) Mandataire: Pouillot, Laurent Pierre Paul

(56) Documents cités:
- FR-A1- 2 557 714
- US-A- 3 970 824
- US-A- 4 598 276
- US-A- 4 605 845
- US-A1- 2005 206 523

## Description

L'invention est du domaine des mécanismes d'identification et de comptage d'objets distribués au hasard. Elle a pour objet un dispositif pour identifier et compter des objets, notamment applicable dans le domaine du commerce pour contrôler la validation des articles remis à une clientèle à partir d'une commande préalablement enregistrée. L'invention est aussi notamment applicable au tri d'articles parmi une pluralité d'articles.

On connaît des mécanismes pour l'identification et le comptage d'objets. Ces mécanismes comprennent dans leur généralité un organe émetteur d'un signal, coopérant avec une cellule portée par l'objet. Cette cellule est une source d'informations captées par un organe récepteur du signal émis et renvoyées par la cellule.

Plus particulièrement, il a été proposé des mécanismes pour l'identification d'articles stockés pour la tenue automatique d'inventaire. Les articles sont porteurs d'une cellule constituée d'un transpondeur résonnant, et sont disposés sur un support approprié. Un organe d'émission et de réception d'un signal est destiné à analyser de façon répétée un jeu de fréquences d'émission-réception afin que tous les produits appartenant à une unité spécifique de tenue de stock placés sur un râtelier soient interrogés collectivement. Les données renvoyées par les transpondeurs à chaque jeu de fréquences particulières sont mémorisées et combinées mathématiquement par des moyens de calcul pour donner le nombre total d'articles. L'organe d'émission et de réception du signal est mobile pour circuler le long du râtelier porteur des articles. Plus précisément, l'organe d'émission et de réception du signal émet à une paire de fréquences affectée à une unité de stockage donnée. Les articles sont équipés d'étiquettes qui résonnent à la paire originale de fréquences, et qui réémettent simultanément une troisième fréquence sur laquelle la partie réceptrice de l'organe d'émission et de réception du signal est accordée. On pourra par exemple se reporter au document FR2557714 (REVLON) qui décrit un mécanisme du genre.

Il a aussi été proposé dans le domaine de l'identification et du comptage d'articles appliqué au commerce un dispositif destiné à identifier et à comptabiliser les articles contenus dans un réceptacle. Un tel dispositif est plutôt appliqué dans le domaine des supermarchés ou magasins analogues. Plus particulièrement, le dispositif est destiné à vérifier automatiquement des articles disposés à l'intérieur du réceptacle en sortie du magasin, pour les identifier, les comptabiliser et établir une facture correspondante. Le dispositif comprend des transmetteurs respectifs affectés à chacun des articles, pour transmettre des données identifiant les articles à un organe de réception de ces données, puis à partir de ces données de calculer le prix total des articles contenus dans le réceptacle. On pourra par exemple se reporter au document US5239167 (LUDWIG KIPP) qui décrit un tel dispositif.

Il apparaît que ces dispositifs mettent en oeuvre des organes onéreux. Leur complexité et leur coût important de revient sont principalement dus à leur application au comptage de nombreux articles à identifier. Cependant, il est de nombreuses applications où le nombre de types différents d'articles à identifier et à compter est faible, tel que de l'ordre d'une cinquantaine, et des dispositifs complexes et coûteux ne sont pas adaptés pour de telles applications.

On connaît par ailleurs dans le domaine du commerce des dispositifs antivol placés en sortie de magasin. Ces dispositifs du type à radio fréquence mettent en oeuvre un organe d'émission d'un signal à une fréquence et à une amplitude données et un organe de réception de ce signal. Un passage obligatoire pour la clientèle est ménagé entre ces deux organes d'émission et de réception. Les articles du magasin sont équipés d'une même étiquette porteuse d'une cellule de type RLC, associant une résistance, une self et une capacité. Ces cellules sont destinées à modifier l'amplitude du signal émis. Dans le cas d'une circulation de cette cellule dans le passage ménagé entre l'organe d'émission du signal et l'organe de réception de ce signal, la modification de l'amplitude du signal, atténué par la cellule, est détectée par l'organe de réception, et une alerte est déclenchée.

L'avantage de tels dispositifs à radio fréquence réside dans leur structure simple, et dans leur faible coût de revient. On notera l'avantage de l'utilisation d'étiquettes porteuses d'une cellule de type RLC, qui sont de faible coût. Cependant en l'état, de tels dispositifs ne sont susceptibles de détecter que la seule présence ou non d'un quelconque article du magasin dans le passage ménagé entre l'organe d'émission et l'organe de réception du signal.

Le but de la présente invention est de proposer un dispositif peu onéreux de comptage et d'identification d'articles disposés en vrac dans un réceptacle, et notamment à l'identification quantitative et qualificative de ces articles. Plus particulièrement, l'invention vise à proposer un tel dispositif qui soit applicable, en raison de son faible coût de revient, au comptage et à l'identification d'articles en vrac en nombre quelconque mais de types différents parmi un jeu de type d'articles en nombre connu. Il est plus particulièrement proposé par la présente invention un tel dispositif d'identification et de comptage applicable à la validation des articles remis à une clientèle à partir d'une commande préalablement enregistrée.

L'invention a pour objet un dispositif de détection d'articles, qui met en oeuvre des moyens de type à radio fréquences pour l'identification et le comptage d'articles en vrac selon la revendication 1. De tels moyens de type à radio fréquence mettent plus particulièrement en oeuvre au moins un organe d'émission d'un signal à une fréquence et à une amplitude données, au moins un organe de réception du signal émis, et au moins un élément de type RLC associant une résistance, une self et une capacité.

Chaque article à détecter est équipé d'un tel élément RLC de sorte que le passage de l'article dans un espace compris entre l'organe d'émission et l'organe de réception induise une atténuation de l'amplitude du signal émis qui est détectée par l'organe de réception. Cette atténuation détectée est génératrice d'une information. On notera que le dispositif de l'invention est du type des dispositifs à radio fréquence utilisés en tant que détecteur antivol d'articles dans les magasins, selon lesquels dispositifs les articles à détecter circulent dans un espace compris entre l'organe d'émission du signal et l'organe de réception du signal émis, et selon lesquels dispositifs les articles sont munis d'un élément RLC consommable, le coût de tels éléments, notamment portés par des étiquettes, autorisant économiquement leur perte après usage.

Selon la présente invention, un dispositif du genre susvisé est principalement reconnaissable en ce que l'organe d'émission est un organe d'émission séquentielle d'une pluralité de signaux à une fréquence respective. Les articles sont répartis par type d'articles, chaque article d'un type étant équipé d'un type d'élément RLC résonnant à une fréquence respective correspondant aux différents signaux émis séquentiellement. Ces dispositions sont telles que le passage d'un lot d'articles en vrac de type différent dans l'espace compris entre l'organe d'émission et l'organe de réception génère pour chaque type d'articles présents dans le lot une atténuation de l'amplitude des signaux émis correspondants. Cette atténuation de signal est détectée par l'organe de réception, et en conséquence génère une information correspondante au moins relative à la présence ou non d'un article de type identifié par l'élément RLC de type spécifique dont il est porteur.

Plus précisément, les articles sont chacun porteurs d'un élément RLC, les articles d'un même type étant porteurs d'un type d'élément RLC résonnant à une même fréquence de signal émis. L'organe d'émission émet séquentiellement des signaux correspondant à chaque type d'éléments RLC. Les articles sont présentés en vrac dans l'espace compris entre l'organe d'émission et l'organe de réception. Pour un type d'article donné présent dans ledit espace, l'amplitude du signal correspondant émis sera atténuée par l'élément RLC dont il est porteur, cette atténuation de signal étant détectée par l'organe de réception. Pour chaque modification d'un signal respectif émis, la présence de l'article porteur de l'élément RLC correspondant à ce signal sera détectée. Il en ressort qu'à partir de l'émission séquentielle des signaux à des fréquences respectives, et du passage des articles en vrac dans ledit espace compris entre l'organe d'émission et l'organe de réception, la détection par l'organe de réception d'une modification de l'amplitude de l'un quelconque des signaux émis correspond à une information relative à la présence d'un type d'article préalablement identifié à partir de l'élément RLC de type spécifique dont il est porteur.

Selon l'invention, la détection par l'organe de réception de l'atténuation de l'amplitude d'un signal à une fréquence donnée génère une information relative à la quantité d'articles d'un même type détecté. Cette information est générée à partir d'une mesure de la puissance d'atténuation du signal détectée, le dispositif étant équipé de tels moyens de mesure.

Plus précisément, l'organe de réception est non seulement équipé de moyens de détection d'une variation de l'amplitude du signal émis, mais aussi de moyens de quantification de cette variation, pour générer une information relative à la quantité d'éléments RLC d'un type donné présents dans l'espace compris entre l'organe d'émission et l'organe de réception.

On notera que ladite mesure de la puissance d'atténuation du signal détectée correspond avantageusement à une mesure par palier de ladite atténuation, chaque palier correspondant à un nombre d'éléments RLC de type correspondant présents dans l'espace compris entre l'organe d'émission et l'organe de réception.

Les signaux émis par l'organe d'émission sont par exemple compris dans une plage de fréquences de l'ordre s'étendant de 1 MHz à 40MHz.

A titre indicatif, le temps d'émission de chacun des signaux émis séquentiellement est de l'ordre de 10 millisecondes.

La durée d'émission d'une séquence de signaux est préférentiellement de l'ordre de 1 seconde.

Le dispositif comprend notamment un calculateur pour compiler les informations générées par la détection des atténuations détectées par l'organe de réception. Ce calculateur est en relation avec des moyens de mémoire associant, pour chaque type d'éléments RLC, le type d'article correspondant. Ces dispositions permettent d'analyser les atténuations de signaux détectées par l'organe de réception, pour affecter à chacune de ces atténuations le ou lesquels des types articles correspondants sont présents dans l'espace compris entre l'organe d'émission et l'organe de réception, et le cas échéant en quel nombre d'articles pour chacun de ces types d'articles.

De préférence, le dispositif comprend des moyens d'affichage en relation avec le calculateur, pour afficher à un poste de contrôle les types d'articles détectés dans l'espace compris entre l'organe d'émission et l'organe de réception.

De préférence encore, le dispositif est en outre associé à des moyens de saisie et de mémorisation d'une commande d'articles de types et en nombre déterminés, et des moyens de comparaison entre la commande et les articles détectés lors de leur passage entre l'organe d'émission et l'organe de réception. Ces dispositions sont telles que le cas échéant, une information d'alerte est générée en cas de non correspondance entre la commande d'articles et les articles détectés.

Selon une variante de réalisation, le dispositif comprend plusieurs couples d'organes d'émission et d'organes de réception orientés suivant les directions respectives d'un repère orthonormé, l'espace étant circonscrit entre ces différents couples d'organes d'émission et d'organes de réception pour accroître la pertinence des informations générées.

On notera que l'élément RLC équipant les articles est notamment du type porté par une étiquette rapportée sur les articles. Il peut cependant être envisagé d'autres modalités d'apport sur les articles de tels éléments RLC sans déroger aux règles de l'invention, par exemple à partir d'un marquage des articles au moyen d'une encre conductrice, telle qu'à base d'argent ou autre matériau conducteur.

Une application privilégiée du dispositif de la présente invention réside dans le contrôle de la validation d'une commande d'articles au regard des articles détectés dans l'espace compris entre l'organe d'émission et l'organe de réception.

Plus particulièrement, une telle application s'est avérée utile au domaine de la restauration rapide, notamment dans le service communément appelé « drive », selon lequel des consommateurs présents dans leur véhicule passent une commande auprès d'un opérateur, cette commande leur étant livrée dans leur véhicule. En effet, il est apparu utile d'exploiter le dispositif de la présente invention à ce type de service, dans la mesure où le nombre de types différents d'articles à la disposition du consommateur est limité et connu, et où le consommateur ayant pris possession de sa commande est difficilement en mesure de contrôler immédiatement la conformité de sa commande, étant au volant de son véhicule et devant libérer l'espace rapidement pour permettre à un consommateur suivant de récupérer sa commande. On comprendra que dans ce cas, l'espace compris entre l'organe d'émission et l'organe de réception, à travers lequel circule les produits contenus en vrac dans un réceptacle, est préférentiellement disposé au voisinage et en amont du guichet utilisé par l'opérateur pour remettre sa commande au consommateur.

Plus particulièrement, un procédé de mise en oeuvre d'un dispositif de la présente invention consiste :
- à saisir et à mémoriser une commande comprenant au moins un article d'au moins un type d'articles,
- à préparer la commande et à placer les articles correspondant à cette commande en vrac dans un réceptacle, les articles étant équipés d'un élément RLC d'un type correspondant au type d'article,
- à placer le réceptacle contenant les articles dans un espace compris entre l'organe d'émission et l'organe de réception,
- à émettre séquentiellement les différents signaux de fréquences respectives à partir de l'organe d'émission, et à détecter l'atténuation éventuelle de chacun des signaux émis,
- à comparer les articles détectés en type et en nombre avec les articles correspondant à la commande.
- à générer le cas échéant une information relative à la non concordance entre la commande saisie et les articles contenus dans le réceptacle.

D'autres applications sont susceptibles d'utiliser un dispositif de la présente invention, telle qu'une application à un dispositif antivol ou à une application au tri d'articles.

La présente invention sera mieux comprise, et des détails en relevant apparaîtront, à la lecture de la description qui va en être faite en relation avec les figures des planches annexées, dans lesquelles :
La figure 1 est une vue schématique illustrant un exemple de réalisation d'un dispositif de la présente invention.
La figure 2 est un schéma illustrant une application à la restauration rapide d'un dispositif de l'invention.

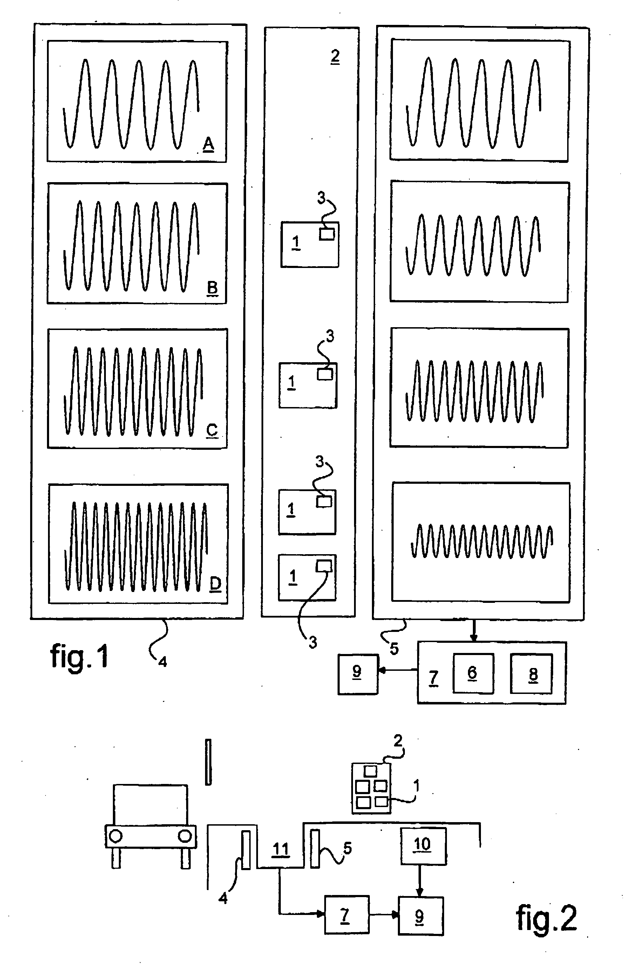

Sur la figure 1, des articles 1 sont contenus en vrac à l'intérieur d'un réceptacle 2. Chacun de ces articles 1 est équipé d'une étiquette 3 de type RLC pour leur identification et leur quantification lors du passage du réceptacle 2 dans un espace ménagé entre un organe d'émission 4 de signaux par radio fréquences et un organe de réception 5 des signaux émis. Le passage d'un article 1 dans l'espace situé entre l'organe d'émission 4 et l'organe de réception 5 atténue le signal émis qui est reçu par ce dernier. On notera que selon une variante non représentée, le dispositif est susceptible de comprendre plusieurs systèmes associant chacun un organe d'émission 4 et un organe de réception 5, respectivement orientés suivant une direction d'un repère orthonormé. Un tel agencement présente l'avantage d'une meilleure couverture de la lecture des signaux reçus par les différents organes de réception 5, et une lecture plus homogène.

Pour identifier les articles 1, par type d'articles, chacun d'eux est équipé d'une étiquette RLC 3 résonnant à une fréquence déterminée. L'organe d'émission 4 émet séquentiellement une pluralité de signaux à des fréquences respectives correspondantes à celles des diverses étiquettes RLC 3 équipant chacun des types d'articles 1. A titre indicatif, les signaux émis sont compris dans une plage de fréquences de l'ordre comprise entre 1MHz et 40MHz, avec un temps d'émission de chacun des signaux de l'ordre de 10 millisecondes. Il en ressort que si pour un signal émis à une fréquence et à une amplitude données, l'amplitude du signal reçu est atténuée, la présence à l'intérieur du réceptacle 2 d'un article 1 du type correspondant est détectée, tel que sur l'exemple illustré pour les signaux B, C, D émis. La détection par l'organe de réception 5 d'une amplitude d'un signal émis non atténuée correspond à une absence à l'intérieur du réceptacle 2 d'article 1 du type correspondant, tel que sur l'exemple illustré pour le signal A émis. La durée d'émission d'une séquence A, B, C, D est de l'ordre de 1 seconde.

En outre, l'organe de réception 5 est équipé de moyens de mesure 6 de l'amplitude de l'atténuation éventuelle de l'amplitude des signaux qu'il reçoit. Il en ressort qu'en fonction de l'importance de l'atténuation de l'amplitude du signal, le nombre d'articles 1 pour un même type d'articles 1 est déterminé, tel que sur l'exemple illustré pour le signal D émis.

Le dispositif est en outre équipé d'un calculateur 7 en relation avec des moyens de mémoire 8 associant pour chaque type d'étiquettes RLC 3 le type d'article 1 correspondant, pour exploiter les informations générées par la détection des signaux par l'organe de réception 5, et en déduire la présence ou non d'articles 1 ainsi que leur nombre pour chaque type d'article 1. Des moyens d'affichage 9 permettent de visualiser le contenu du réceptacle 2, quant au type et au nombre d'articles 1 qu'il contient.

Sur la figure 2, un dispositif de la présente invention est appliqué au contrôle de la pertinence entre une commande d'articles 1 et les articles 1 livrés. Sur l'exemple illustré, cette application relève du domaine de la restauration rapide, au poste de livraison des commandes communément appelé « drive », dans lequel un conducteur d'un véhicule effectue une commande qui lui est livrée directement dans son véhicule.

Lorsque le conducteur effectue une commande auprès d'un opérateur, celui-ci saisit sur un ordinateur 10 ou analogue la nature de cette commande, et plus particulièrement le type et le nombre d'articles 1 composant cette commande. On comprendra que ces moyens de saisie 10 sont des moyens associés au dispositif de la présente invention, pouvant ou non faire partie intégrante de ce dispositif, et que ces moyens de saisie 10 sont susceptibles d'être quelconques sans déroger aux règles de l'invention énoncées.

L'opérateur prépare la commande et place les articles 1 dans un réceptacle 2. Les articles 1 sont enveloppés par un emballage individuel susceptible d'être porteur de l'étiquette RLC 3 correspondant au type de l'article 1. La commande étant préparée, l'opérateur place le réceptacle à l'intérieur d'un poste de vérification 11, tel qu'un compartiment, un tunnel ou analogue, correspondant à un espace disposé entre l'organe d'émission 4 et

l'organe de réception 5. La séquence de signaux est émise, et les informations relatives à la réception de ces signaux sont analysées par le calculateur 7. Les moyens d'affichage 9 permettent à l'opérateur de visualiser le nombre et le type d'articles 1 contenus dans le réceptacle 2, et l'opérateur vérifie que les articles 1 remis correspondent à la commande. La commande préparée étant conforme, l'opérateur peut remettre cette commande au conducteur.

## Revendications

1. Dispositif de détection d'articles (1) mettant en oeuvre des moyens de type à radio fréquences pour l'identification et le comptage d'articles en vrac, ce dispositif mettant en oeuvre au moins un organe d'émission (4) d'un signal à une fréquence et à une amplitude données, et au moins un organe de réception (5) du signal émis, et au moins un élément de type RLC (3) associant une résistance, une self et une capacité, chaque article (1) à détecter étant équipé d'un tel élément RLC (3) de sorte que le passage de l'article (1) dans un espace (11) compris entre l'organe d'émission (4) et l'organe de réception (5) induise une atténuation de l'amplitude du signal émis qui est détectée par l'organe de réception (5), ladite atténuation détectée étant génératrice d'une information, **caractérisé en ce que** l'organe d'émission (4) est un organe d'émission séquentielle d'une pluralité de signaux (A,B,C,D) à une fréquence respective, et **en ce que** les articles (1) étant répartis par type d'articles (1), chaque article (1) d'un type est équipé d'un type d'élément RLC (3) résonnant à une fréquence respective correspondant aux différents signaux (A,B,C,D) émis séquentiellement, de sorte que le passage d'un lot d'articles (1) en vrac de type différent dans l'espace (11) compris entre l'organe d'émission (4) et l'organe de réception (5) génère pour chaque type d'articles (1) présents dans le lot une atténuation de l'amplitude des signaux émis (A,B,C.D) correspondants qui est détectée par l'organe de réception (5), et en conséquence génère une information correspondante au moins relative à la présence ou non d'un article (1) de type identifié par l'élément RLC (3) de type spécifique dont il est porteur, et **en ce que** la détection par l'organe de réception (5) de l'atténuation de l'amplitude d'un signal à une fréquence donnée génère une information relative à la quantité d'articles (1) d'un même type détecté à partir d'une mesure de la puissance d'atténuation du signal détectée, le dispositif étant équipé de tels moyens de mesure (6).

2. Dispositif selon la revendication 1, **caractérisé en ce que** ladite mesure de la puissance d'atténuation du signal détectée correspond à une mesure par paliers de ladite atténuation, chaque palier correspondant à un nombre d'éléments RLC (3) de type correspondant présents dans l'espace (11) compris entre l'organe d'émission (4) et l'organe de réception (5).

3. Dispositif selon l'une quelconque des revendications précédentes, **caractérisé en ce que** les signaux (A,B,C,D) émis par l'organe d'émission (4) sont compris dans une plage de fréquences de l'ordre s'étendant de 1MHz à 40MHz.

4. Dispositif selon l'une quelconque des revendications précédentes, **caractérisé en ce que** le temps d'émission de chacun des signaux (A,B,C,D) émis séquentiellement est de l'ordre de 10 millisecondes.

5. Dispositif selon l'une quelconque des revendications précédentes, **caractérisé en ce que** la durée d'émission d'une séquence de signaux (A,B,C,D) est de l'ordre de 1 seconde.

6. Dispositif selon l'une quelconque des revendications précédentes, **caractérisé en ce qu'**il comprend un calculateur (7) pour compiler les informations générées par la détection des atténuations détectées par l'organe de réception (5), ce calculateur (7) étant en relation avec des moyens de mémoire (8) associant pour chaque type d'éléments RLC (3) le type d'article (1) correspondant.

7. Dispositif selon la revendication 6, **caractérisé en ce qu'**il comprend des moyens d'affichage (9) en relation avec le calculateur (7) pour afficher à un poste de contrôle les types d'articles (1) détectés dans l'espace (11) compris entre l'organe d'émission (4) et l'organe de réception (5).

8. Dispositif selon la revendication 6, **caractérisé en ce qu'**il est associé à des moyens de saisie (10) et de mémorisation d'une commande d'articles (1) de types et en nombre déterminés, et des moyens de comparaison entre la commande et les articles détectés lors de leur passage entre l'organe d'émission (4) et l'organe de réception (5), pour le cas échéant générer une information d'alerte en cas de non correspondance entre la commande d'articles (1) et les articles (1) détectés.

9. Dispositif selon l'une quelconque des revendications précédentes, **caractérisé en ce qu'**il comprend plusieurs couples d'organe d'émission (4) et d'organe de réception (5) orientés suivant les directions respectives d'un repère orthonormé, l'espace étant circonscrit entre ces différents couples d'organes d'émission (4) et d'organe de réception (5) pour accroître la pertinence des informations générées.

10. Application d'un dispositif selon l'une quelconque des revendications précédentes au contrôle de la validation d'une commande d'articles (1) au regard des articles (1) détectés dans l'espace (11) compris entre l'organe d'émission (4) et l'organe de réception (5).

11. Application selon la revendication 10 à la restauration rapide.

12. Application d'un dispositif selon l'une quelconque des revendications 1 à 9 à un dispositif antivol.

13. Procédé de mise en oeuvre d'un dispositif selon l'une quelconque des revendications 1 à 9, **caractérisé en ce qu'**il consiste :
- à saisir et à mémoriser une commande comprenant au moins un article (1) d'au moins un type d'articles (1),
- à préparer la commande et à placer les articles (1) correspondant à cette commande en vrac dans un réceptacle (2), les articles (1) étant équipés d'un élément RLC (3) d'un type correspondant au type d'article (1),
- à placer le réceptacle (2) contenant les articles (1) dans un espace (11) compris entre l'organe d'émission (4) et l'organe de réception (5),
- à émettre séquentiellement les différents signaux (A,B,C,D) de fréquences respectives à partir de l'organe d'émission (4), et à détecter l'atténuation éventuelle de chacun des signaux émis,
- à comparer les articles (1) détectés en type et en nombre avec les articles (1) correspondant à la commande,
- à générer le cas échéant une information relative à la non concordance entre la commande saisie et les articles (1) contenus dans le réceptacle (2).

## Claims

1. Apparatus for detecting articles (1) implementing radiofrequency type means for identifying and counting articles in bulk, the apparatus implementing at least one transmitter member (4) for transmitting a signal at given frequency and amplitude, at least one receiver member (5) for receiving the transmitted signal, and at least one RLC type element (3) associating a resistor, an inductor, and a capacitor, each article (1) for detection being fitted with such an RLC element (3) whereby passage of the article (1) through a space (11) extending between the transmitter member (4) and the receiver member (5) induces attenuation in the amplitude of the transmitted signal which is detected by the receiver member (5), said detected attenuation generating information, **characterised in that** the transmitter member (4) is a member for sequentially transmitting a plurality of signals (A, B, C, D) at respective frequencies, and **in that** the articles (1) are distributed by type of article (1), each article (1) of one type being fitted with an element (3) of the RLC type that is resonant at a respective frequency corresponding to the different signals (A, B, C, D) that are transmitted sequentially, such that when a batch of articles (1) of different types in bulk passes through the space (11) extending between the transmitter member (4) and the receiver member (5), attenuation is generated in the amplitude of the transmitted signals (A, B, C, D) corresponding to each type of article (1) present in the batch, which attenuation is detected by the receiver member (5), thereby generating corresponding information relating at least to the presence or absence of an article (1) of type identified by the RLC element (3) of the specific type carried by said article, and **in that** detection by the receiver member (5) of the attenuation in the amplitude of a signal at a given frequency generates information relating to the quantity of articles (1) of a same type detected on the basis of measuring the magnitude of the attenuation in the detected signal, the apparatus being fitted with such measurement means (6).

2. Apparatus according to Claim 1, **characterised in that** said measurement of the magnitude of detected signal attenuation corresponds to measuring said attenuation in steps, each step corresponding to a number of RLC elements (3) of corresponding type present in the space (11) extending between the transmitter member (4) and the receiver member (5).

3. Apparatus according to any one of the preceding claims, **characterised in that** the signals (A, B, C, D) transmitted by the transmitter member (4) lie in a frequency range extending from about 1 MHz to about 40 MHz.

4. Apparatus according to any one of the preceding claims, **characterised in that** the duration for which each of the sequentially transmitted signals (A, B, C, D) is transmitted is about 10 milliseconds.

5. Apparatus according to any one of the preceding claims, **characterised in that** the duration of transmission of a signal sequence (A, B, C, D) is about 1 second.

6. Apparatus according to any one of the preceding claims, **characterised in that** it includes a computer (7) for compiling the information generated by detecting the attenuations detected by the receiver member (5), the computer (7) being in communication with memory means (8) associating each type of RLC element (3) with the corresponding type of article (1).

7. Apparatus according to Claim 6, **characterised in that** it includes display means (9) associated with the computer (7) to display at a control station the types of article (1) detected in the space (11) extending between the transmitter member (4) and the receiver member (5).

8. Apparatus according to Claim 6, **characterised in that** it is associated with input means (10) and storage means for inputting and storing an order for articles (1) of determined types and numbers, and means for comparison between the order and the articles detected on passing between the transmitter member (4) and the receiver member (5) so as to generate, where appropriate, an alert in the event of the articles (1) of the order not matching the detected articles (1).

9. Apparatus according to any one of the preceding claims, **characterised in that** it includes a plurality of transmitter member (4) and receiver member (5) pairs oriented along respective directions in an orthonormal frame of reference, with the space extending between these various transmitter member (4) and receiver member (5) pairs, thereby enabling the information generated to be made more pertinent.

10. Use of apparatus according to any one of the preceding claims for monitoring an order for articles (1) for validity relative to articles (1) detected in the space (11) extending between the transmitter member (4) and the receiver member (5).

11. Use according to Claim 10 in the fast food business.

12. Use of apparatus according to any one of Claims 1 to 9 as antitheft apparatus.

13. Method of implementing apparatus according to any one of Claims 1 to 9, **characterised in that** it consists:
- in inputting and storing an order comprising at least one article (1) of at least one type of article (1);
- in preparing the order and placing the articles (1) corresponding to said order in bulk in a receptacle (2), the articles (1) being fitted with an RLC element (3) of a type that corresponds to the type of article (1);
- in placing the receptacle (2) containing the articles (1) in a space (11) extending between the transmitter member (4) and the receiver member (5);
- in sequentially transmitting the different signals (A, B, C, D) at respective frequencies from the transmitter member (4), and in detecting any attenuation in each of the transmitted signals;
- in comparing the type and number of the articles (1) as detected with the corresponding articles (1) in the order;
- and, where appropriate, in generating information relating to a mismatch between the order as input and the articles (1) contained in the receptacle (2).

## Patentansprüche

1. Vorrichtung zur Erfassung von Artikeln (1), die Einrichtungen vom Typ mit Radiofrequenz zur Identifizierung und zum Zählen loser Artikel verwendet, wobei diese Vorrichtung mindestens ein Sendeorgan (4) eines Signals mit gegebener Frequenz und Amplitude und mindestens ein Empfangsorgan (5) des gesendeten Signals und mindestens ein Element vom Typ RLC (3) verwendet, das einen Widerstand, eine Induktivität und eine Kapazität vereint, wobei jeder zu erfassende Artikel (1) mit einem solchen RLC-Element (3) ausgestattet ist, so dass der Übergang des Artikels (1) in einen Raum (11) zwischen dem Sendeorgan (4) und dem Empfangsorgan (5) eine Dämpfung der Amplitude des gesendeten Signals induziert, die vom Empfangsorgan (5) erfasst wird, wobei die erfasste Dämpfung eine Information erzeugt, **dadurch gekennzeichnet, dass** das Sendeorgan (4) ein Organ zur sequentiellen Aussendung mehrerer Signale (A, B, C, D) auf einer jeweiligen Frequenz ist, und dass, wenn die Artikel (1) nach Artikeltyp (1) verteilt sind, jeder Artikel (1) eines Typs mit einem RLC-Element-TYp (3) ausgestattet ist, das bei einer jeweiligen Frequenz schwingt, die den verschiedenen, sequentiell gesendeten Signalen (A, B, C, D) entspricht, so dass der Übergang einer Partie von losen Artikeln (1) unterschiedlichen Typs in den Raum (11) zwischen dem Sendeorgan (4) und dem Empfangsorgan (5) für jeden Typ von in der Partie enthaltenen Artikeln (1) eine Dämpfung der Amplitude der entsprechenden gesendeten Signale (A, B, C, D) erzeugt, die vom Empfangsorgan (5) erfasst wird, und folglich eine entsprechende Information zumindest bezüglich des Vorhandenseins oder Nichtvorhandenseins eines Artikels (1) eines durch das RLC-Element (3) spezifischen Typs, das er trägt, identifizierten Typs erzeugt, und dass die Erfassung der Dämpfung der Amplitude eines Signals auf einer gegebenen Frequenz durch das Empfangsorgan (5) eine Information bezüglich der Menge von Artikeln (1) eines gleichen erfassten Typs ausgehend von einer Messung der erfassten Dämpfungsleistung des Signals erzeugt, wobei die Vorrichtung mit solchen Messeinrichtungen (6) ausgestattet ist.

2. Vorrichtung nach Anspruch 1, **dadurch gekennzeichnet, dass** die Messung der erfassten Dämpfungsleistung des Signals einer stufenweisen Messung der Dämpfung entspricht, wobei jede Stufe einer Anzahl von RLC-Elementen (3) entsprechenden Typs entspricht, die in dem Raum (11) zwischen dem Sendeorgan (4) und dem Empfangsorgan (5) vorhanden sind.

3. Vorrichtung nach einem der vorhergehenden Ansprüche, **dadurch gekennzeichnet, dass** die von dem Sendeorgan (4) gesendeten Signale (A, B, C, D) in einem Frequenzbereich der Größenordnung zwischen 1 MHz und 40 MHz enthalten sind.

4. Vorrichtung nach einem der vorhergehenden Ansprüche, **dadurch gekennzeichnet, dass** die Sendezeit jedes der sequentiell gesendeten Signale (A, B, C, D) in der Größenordnung von 10 Millisekunden liegt.

5. Vorrichtung nach einem der vorhergehenden Ansprüche, **dadurch gekennzeichnet, dass** die Sendedauer einer Sequenz von Signalen (A, B, C, D) in der Größenordnung von 1 Sekunde liegt.

6. Vorrichtung nach einem der vorhergehenden Ansprüche, **dadurch gekennzeichnet, dass** sie einen Rechner (7) aufweist, um die durch die Erfassung der vom Empfangsorgan (5) erfassten Dämpfungen erzeugten Informationen zu kompilieren, wobei dieser Rechner (7) mit Speichereinrichtungen (8) in Verbindung steht, die für jeden Typ von RLC-Elementen (3) den entsprechenden Artikeltyp (1) zuordnen.

7. Vorrichtung nach Anspruch 6, **dadurch gekennzeichnet, dass** sie Anzeigeeinrichtungen (9) in Verbindung mit dem Rechner (7) aufweist, um einer Kontrollstation die im Raum (11) zwischen dem Sendeorgan (4) und dem Empfangsorgan (5) erfassten Artikeltypen (1) anzuzeigen.

8. Vorrichtung nach Anspruch 6, **dadurch gekennzeichnet, dass** sie Einrichtungen zur Eingabe (10) und zur Speicherung einer Bestellung von Artikeln (1) bestimmter Typen und von bestimmter Anzahl und Einrichtungen zum Vergleich zwischen der Bestellung und den bei ihrem Durchgang zwischen dem Sendeorgan (4) und dem Empfangsorgan (5) erfassten Artikeln zugeordnet ist, um im Fall einer Nichtentsprechung zwischen der Bestellung von Artikeln (1) und den erfassten Artikeln (1) ggf. eine Warninformation zu erzeugen.

9. Vorrichtung nach einem der vorhergehenden Ansprüche, **dadurch gekennzeichnet, dass** sie mehrere Paare von Sendeorganen (4) und Empfangsorganen (5) aufweist, die gemäß den jeweiligen Richtungen eines orthonormierten Bezugssystems ausgerichtet sind, wobei der Raum zwischen diesen verschiedenen Paaren von Sendeorganen (4) und von Empfangsorganen (5) begrenzt ist, um die Relevanz der erzeugten Informationen zu erhöhen.

10. Anwendung einer Vorrichtung nach einem der vorhergehenden Ansprüche zur Kontrolle der Validierung einer Bestellung von Artikeln (1) in Bezug auf die in dem Raum (11) zwischen dem Sendeorgan (4) und dem Empfangsorgan (5) erfassten Artikel (1).

11. Anwendung nach Anspruch 10 auf Schnellrestaurants.

12. Anwendung einer Vorrichtung nach einem der Ansprüche 1 bis 9 auf eine Antidiebstahlsvorrichtung.

13. Verfahren zur Verwendung einer Vorrichtung nach einem der Ansprüche 1 bis 9, **dadurch gekennzeichnet, dass** es darin besteht:
- eine Bestellung einzugeben und zu speichern, die mindestens einen Artikel (1) mindestens eines Typs von Artikeln (1) enthält,
- die Bestellung vorzubereiten und die dieser Bestellung entsprechenden Artikel (1) lose in einem Behälter (2) anzuordnen, wobei die Artikel (1) mit einem RLC-Element (3) eines dem Artikeltyp (1) entsprechenden Typs ausgestattet sind,
- den die Artikel (1) enthaltenden Behälter (2) in einem Raum (11) anzuordnen, der sich zwischen dem Sendeorgan (4) und dem Empfangsorgan (5) befindet,
- die verschiedenen Signale (A, B, C, D) mit jeweiligen Frequenzen ausgehend von dem Sendeorgan (4) sequentiell zu senden und die mögliche Dämpfung jedes der gesendeten Signale zu erfassen,
- die erfassten Artikel (1) bezüglich des Typs und der Anzahl mit den der Bestellung entsprechenden Artikeln (1) zu vergleichen,
- gegebenenfalls eine Information der Nichtübereinstimmung zwischen der eingegebenen Bestellung und den im Behälter (2) enthaltenen Artikeln (1) zu erzeugen.
